# EUROPÄISCHE PATENTANMELDUNG

(11) **EP 2 885 966 A1**
(43) Veröffentlichungstag der Anmeldung: **24.06.2015**
(21) Anmeldenummer: 14185906.6
(22) Anmeldetag: 23.09.2014
(51) Int. Cl.: A01K 5/02, B65D 55/00

(54) **Unbemannter Futterroboter zur automatisierten Verteilung von Viehfutter**

(30) Priorität: 23.12.2013 DE 202013105907 U
(71) Anmelder: Trioliet Holding B.V., 7575 BE Oldenzaal (NL)
(72) Erfinder: Liet, Cornelis Hendricus, 7581 PJ Losser (NL)
(74) Vertreter: Grünecker Patent- und Rechtsanwälte PartG mbB

(57) **Zusammenfassung**

Unbemannter Futterroboter (1) zur automatisierten Verteilung von Viehfutter mit einer Verteileinrichtung (3), die an einem selbstfahrenden Fahrwerk (4) angeordnet ist, dadurch gekennzeichnet, dass das Fahrwerk (4) einen Raupenantrieb (5) mit wenigstens zwei Antriebsketten (6) umfasst.

## Beschreibung

Die Erfindung betrifft einen unbemannten Futterroboter zur automatisierten Verteilung von Viehfutter mit den Merkmalen des Oberbegriffs von Anspruch 1.

Üblicherweise werden derartige Futterroboter dazu eingesetzt, Vieh in einem Stall automatisiert mit Futter aus einem Silo oder aus einer Futterküche (Zufuhrboden oder Bunker oder andere Formen von Zwischenlagern) zu versorgen. Zunächst wird dazu das Futter aus dem Silo oder der Futterküche mittels einer Beladeeinrichtung in einen Futterbehälter des Futterroboters eingefüllt. Anschließend fährt der Futterroboter unbemannt mittels seines selbstfahrenden Fahrwerks in die Stallgassen, mischt das Futter im Futterbehälter mittels eines Mischwerkzeugs und lädt mit der Verteileinrichtung das Futter auf Futtertischen vor dem Vieh ab. Die Futtertische sind beispielsweise an den Längsrändern der Stallgassen ausgebildet und aus hygienischen Gründen sowie zum Schutz vor Säureeinwirkung mit einer Schutzschicht versehen. Die Schutzschicht kann beispielsweise eine Lage Fliesen oder eine Epoxydharzbeschichtung sein.

Alternativ oder zusätzlich können derartige Futterroboter einen Futterschieber als Verteileinrichtung umfassen, mit dem das bereits am Stallboden liegende Futter aus der Mitte der Stallgasse zu den Futtertischen geschoben wird. Darüber hinaus schützt der Futterschieber die Räder davor, dass Futter unter die Räder gelangt.

Bei der Fahrt erfasst eine Steuerung des selbstfahrenden Fahrwerks die Drehzahlen der einzelnen Räder, um daraus die tatsächlich zurückgelegte Bewegungsbahn des Futterroboters abzuleiten. Dadurch kann nun das selbstfahrende Fahrwerk so gesteuert werden, dass der Futterroboter der gewünschten Bewegungsbahn folgt.

Das Fahrwerk des Futterroboters ist üblicherweise mit vier relativ kleinen Rädern ausgebildet, da hierdurch niedrigere Antriebsdrehmomente erforderlich sind und geringere Kosten für die Räder anfallen.

Durch den glatten Boden auf den Futtertischen sowie das darauf in einzelnen Futterhäufchen liegende Futter kann es gelegentlich dazu kommen, dass das Fahrwerk blockiert oder durchrutscht. Nachteilig dabei ist, dass dadurch die gemessenen Drehzahlen der einzelnen Räder verfälscht werden und folglich die Erfassung der tatsächlichen Bewegungsbahn gestört wird.

Daher ist es Aufgabe der vorliegenden Erfindung, einen unbemannten Futterroboter mit einem selbstfahrenden Fahrwerk bereitzustellen, bei dem die gewünschte Bewegungsbahn besonders zuverlässig eingehalten wird.

Die Erfindung löst diese Aufgabe bei einem unbemannten Futterroboter zur automatisierten Verteilung von Viehfutter mit den Merkmalen des Oberbegriffs des Anspruchs 1 mit den Merkmalen des kennzeichnenden Teils, gemäß dem das Fahrwerk einen Raupenantrieb mit wenigstens zwei Antriebsketten umfasst.

Dadurch, dass das Fahrwerk einen Raupenantrieb umfasst, ist die Aufstandsfläche des Fahrwerks auf dem Boden besonders groß ausgebildet. Anders ausgedrückt wird die Gewichtskraft des gesamten Futterroboters über den Raupenantrieb und die beiden Antriebsketten auf eine besonders große Bodenfläche verteilt, so dass kleine Futterhaufen einfach überfahren werden können, ohne dass der Futterroboter seinen Kurs verlässt. Folglich ist ein derartiges Fahrzeug unempfindlich gegen Schlupf und erlaubt so besonders zuverlässige Fahreigenschaften beim Einsatz in Stallgassen. Damit ist eine besonders genaue Erfassung der Bewegung der Antriebsketten möglich und die gewünschte Bewegungsbahn kann zuverlässig eingehalten werden.

Der Futterroboter kann ein unbemannter Futterwagen sein. Der Futterroboter kann dazu ausgebildet sein, Futter aus einem Silo oder einer Futterküche aufzunehmen und dieses über die Verteileinrichtung automatisch zu verteilen. Zusätzlich oder alternativ kann der Futterroboter dazu ausgebildet sein, das bereits auf dem Stallboden liegende Viehfutter mit der Verteileinrichtung zu verteilen. Automatisierte Verteilung kann hier bedeuten, dass der Futterroboter eine Steuerung umfasst, die zur programmgesteuerten Verteilung des Futters im Stall ausgebildet ist. Ferner kann automatisierte Verteilung bedeuten, dass die Verteilung im Wesentlichen autonom durch den Futterroboter ohne Eingriff einer Bedienperson erfolgt. Automatisierte Verteilung kann auch bedeuten, dass die Verteilung anhand von einer Bedienperson voreingestellter Parameter erfolgt. Der Futterroboter kann dazu ausgebildet sein, das Futter den Tieren individuell zuzuteilen. Das Viehfutter kann für Vieh als Futter vorgesehen sein. Das Vieh kann landwirtschaftliche Nutztiere, insbesondere Rinder, Schafe und/oder Ziegen umfassen.

Die Verteileinrichtung kann eine Fördereinrichtung umfassen, um das Viehfutter aus einem Futterbehälter zu Ausgabeöffnungen zu fördern. Die Fördereinrichtung kann ein Förderband und/oder eine Förderschnecke sein. Die Verteileinrichtung kann einen Auswurfmechanismus umfassen, mit dem das Viehfutter fächerartig verteilbar ist. Die Verteileinrichtung kann eine Mischschnecke im Futterbehälter und einen Schieber umfassen, der optional dazu ausgebildet ist, das von der Mischschnecke gemischte Viehfutter direkt vom Schieber durch Ausgabeöffnungen zu verteilen.

Das selbstfahrende Fahrwerk kann eine Steuerung, einen Frequenzumrichter, einen Energiespeicher, ein Getriebe und/oder einen Antrieb umfassen. Selbstfahrend kann hier bedeuten, dass das Fahrwerk unbemannt fahrbar ist. Das selbstfahrende Fahrwerk kann mit einem Zentralrechner verbindbar sein, um Daten elektronisch auszutauschen. Die ausgetauschten Daten können gewünschte Bewegungswege, Futterdosierungen, Daten der Stallgassen, Daten der Futtertische, Futtertypen, Verteilungsangaben für das Viehfutter und/oder Silostandorte umfassen. Der gewünschte Bewegungsweg kann ein Fahrweg im Stall, in Stallgassen und/oder zwischen verschiedenen Gebäuden sein. Die Steuerung des selbstfahrenden Fahrwerks kann dazu ausgebildet sein, derartige Daten zu verarbeiten, um einen Bewegungsweg und/oder Futterdosierungen zu berechnen. Der Antrieb des selbstfahrenden Fahrwerks kann ein Elektromotor sein. Denkbar ist aber auch, dass es sich bei dem Antrieb um einen Verbrennungsmotor handelt.

Der Raupenantrieb des Fahrwerks kann zwei Stützrahmen umfassen, an dem jeweils wenigstens eine Antriebskette aufgehängt ist. Der Raupenantrieb kann für jede Antriebskette zwei Umlenkrollen und wenigstens eine Führungsrolle umfassen. Die Führungsrolle kann dazu ausgebildet sein, die Antriebskette entlang der Laufrichtung zu führen. Eine Umlenkrolle kann dazu ausgebildet sein, den Raupenantrieb mit dem Antrieb des Fahrwerks zu koppeln. Weiter kann der Raupenantrieb Feder- und Dämpferelemente umfassen. Dadurch kann der Raupenantrieb gleichmäßiger über Unebenheiten hinwegrollen. Die wenigstens zwei Antriebsketten können jeweils als mehrteilige Gliederkette oder bandartig aus einem flexiblen Material ausgebildet sein. Das flexible Material kann ein Kunststoff sein, beispielsweise Gummi. Die beiden Antriebsketten können ein Profil zur besseren Bodenhaftung aufweisen und/oder um unebenen Untergrund auszugleichen. Der Raupenantrieb kann eine Spannrolle umfassen, um die Antriebskettenspannung einzustellen. Die Spannrolle kann optional eine Umlenkrolle und/oder eine Führungsrolle sein.

Der Futterroboter kann einen Futterbehälter umfassen, der optional zu einer durch einen Massenmittelpunkt des unbeladenen Futterroboters vertikal verlaufenden Symmetrieachse symmetrisch ausgebildet sein. Der Futterbehälter kann wannenartig, nach oben offen ausgebildet sein. Der Futterbehälter kann eine im Wesentlichen ovale Grundfläche aufweisen, deren längere Achse parallel zur Fahrtrichtung ausgerichtet ist. Der Futterbehälter kann wenigstens eine Mischschnecke zur Verkleinerung und/oder Mischung des Viehfutters umfassen. Der Futterbehälter kann dazu ausgebildet sein, mit einer Beladeeinrichtung, einer Futterküche und/oder einem Silo verbindbar zu sein, um das Viehfutter in den Futterbehälter zu füllen.

Durch die symmetrische Ausbildung des Futterbehälters zur vertikal verlaufenden Symmetrieachse kommt das Viehfutter beim Beladen weitestgehend symmetrisch zur Symmetrieachse im

Futterbehälter zu liegen. Dadurch liegt auch der Massenmittelpunkt des Viehfutters annähernd vertikal über oder unter dem Massenmittelpunkt des unbeladenen Futterroboters und ändert damit nicht den Drehpunkt des Fahrwerks bei einer Kurvenfahrt. Dadurch kann der gewünschte Bewegungsweg noch zuverlässiger eingehalten werden. Der Massenmittelpunkt kann anders ausgedrückt der Schwerpunkt des gesamten, unbeladenen Futterroboters sein. Vertikal kann die Richtung sein, die auf den Erdmittelpunkt gerichtet ist.

Der Futterbehälter kann ein, zwei, drei oder mehrere Mischschnecken umfassen, die zu der Symmetrieachse symmetrisch angeordnet sind. Dadurch wird auch bei einer Mischung des Futters der Schwerpunkt gegenüber dem zuvor erwähnten Massenmittelpunkt des unbeladenen Futterroboters nur wenig verändert. Die Mischschnecken können mit einem Antrieb verbunden sein. Die Mischschnecken können vertikal, optional parallel zur Symmetrieachse und/oder über die Höhe des Futterbehälters verlaufen.

Ein Massenmittelpunkt des Fahrwerks kann mit der Symmetrieachse zusammenfallen. Dadurch verändert sich der Massenmittelpunkt des Futterroboters bei einer Beladung des Futterbehälters besonders wenig. Massenmittelpunkt des Fahrwerks kann hier bedeuten, dass dies der Schwerpunkt aller Komponenten des Fahrwerks ist.

Ein gemeinsamer Massenmittelpunkt der beiden Antriebsketten kann mit der Symmetrieachse zusammenfallen. Dadurch verläuft die Drehachse möglichst mittig durch den Futterroboter und es wird ein besonders kleiner Wendekreis erzielt.

Der Futterroboter kann wenigstens eine Messeinrichtung zur Bestimmung der tatsächlichen Bewegungsbahn umfassen, die optional mit einem Messrad ausgebildet ist. Dadurch kann der Schlupf der Antriebsketten auf dem Boden unabhängig vom Raupenantrieb gemessen und so die tatsächliche Bewegungsbahn besonders genau ermittelt werden. Besonders vorteilhaft kann die Messeinrichtung zwei Messräder umfassen, mit denen der Schlupf beider Antriebsketten unabhängig voneinander bestimmt werden kann.

Der Raupenantrieb kann zur Verstellung einer Aufstandsfläche der Antriebsketten mit wenigstens einer Kettenführungsrolle ausgebildet sein, die mittels eines Antriebs höhenverstellbar ist. Dadurch, dass die Kettenführungsrolle mittels des Antriebs höhenverstellbar ist, kann diese ein Segment der Antriebskette nach unten drücken und damit die Aufstandsfläche des Raupenantriebs verkleinern. Dadurch ist eine präzisere Kurvenfahrt des Raupenantriebs möglich. Aufstandsfläche der Antriebsketten kann hier bedeuten, dass dies die Fläche des Raupenantriebs ist, die mit dem Boden in direktem Kontakt steht. Höhenverstellbar kann hier bedeuten, dass die Kettenführungsrolle im Wesentlichen vertikal verstellbar ist. Der Antrieb kann ein elektrischer, pneumatischer oder hydraulischer Antrieb sein. Der Antrieb kann ein Linearantrieb sein. Die Kettenführungsrolle kann über einen Hebelmechanismus mit dem Antrieb verbunden sein.

Der Raupenantrieb kann genau zwei Antriebsketten umfassen, wobei an wenigstens einer der zwei Antriebsketten die höhenverstellbare Kettenführungsrolle angeordnet ist. Dadurch kann der Mechanismus zur Verstellung der Aufstandsfläche besonders einfach ausgeführt werden.

Der Raupenantrieb kann genau zwei Antriebsketten umfassen, wobei an wenigstens einer der zwei Antriebsketten zwei der höhenverstellbaren Kettenführungsrollen angeordnet sind. Dadurch kann die Aufstandsfläche der jeweiligen Antriebskette besonders klein eingestellt werden und es ergibt sich ein noch genauerer Drehpunkt des Raupenantriebs bei einer Kurvenfahrt. Die beiden höhenverstellbaren Kettenführungsrollen können über einen Hebelmechanismus mit einem gemeinsamen Antrieb verbunden sein. Denkbar ist auch, dass beide getrennt voneinander höhenverstellbar sind und jeweils mit einem Antrieb verbunden sind. Für eine definierte Position und Kurvenfahrt könnte man nur auf einer Seite die Stützrollen ausfahren, z.B. 2 oder 3 oder 4 an einer Seite, um eine präzise Kurvenfahrt zu erreichen.

Der Raupenantrieb kann genau vier Antriebsketten umfassen, die zum Lenken des Futterroboters paarweise gegeneinander schwenkbar sind. Dadurch kann die Bewegungsbahn bei einer Kurvenfahrt noch genauer reproduziert und erfasst werden. Die vier Antriebsketten können paarweise um eine vertikale Achse schwenkbar sein. Eines der Kettenpaare kann in Fahrtrichtung vorne und das andere in Fahrtrichtung hinten angeordnet sein. Anders ausgedrückt können die vier Antriebsketten ähnlich wie Räder an den Ecken des Fahrwerks angeordnet sein. Dabei können ein Kettenpaar oder beide Kettenpaare gegenüber dem Fahrwerk schwenkbar sein. Ebenfalls ist hier denkbar, dass für eine präzisere Kurvenfahrt in wenigstens einer der vier Antriebsketten eine höhenverstellbare Kettenführungsrolle ausgebildet ist. Zum Antrieb der vier Antriebsketten können vier separate Motoren, zwei oder ein gemeinsamer Motor vorgesehen sein.

Die Verteileinrichtung kann einen Futterschieber umfassen, der optional den Raupenantrieb horizontal an allen Seiten umschließt. Dadurch kann das Futter an keiner Seite in den Futterroboter eindringen und den Raupenantrieb verstopfen. Der Futterschieber kann plattenartig an allen vier Seiten des Futterroboters ausgebildet sein.

Der Futterroboter kann einen elektrischen Energiespeicher zur autonomen Stromversorgung des Raupenantriebs umfassen, der die Energie im Wesentlichen mittels Kondensatoren speichert. Dadurch kann der Futterroboter die Antriebsenergie bei der Fahrt zwischen zwei Ställen zwischenspeichern. Durch die Speicherung in Kondensatoren kann der Energiespeicher besonders schnell aufgeladen werden. Darüber hinaus sind Kondensatoren besonders lange haltbar. Der Energiespeicher kann einen Frequenzumrichter umfassen.

Darüber hinaus stellt die Erfindung mit dem Anspruch 13 ein System bereit, umfassend einen Futterroboter nach wenigstens einem der Ansprüche 1 - 12 und eine einem vorbestimmten Bewegungsweg des Futterroboters folgende Stromschiene, wobei der Futterroboter zur Stromversorgung über einen Schleifkontakt mit der Stromschiene verbunden ist. Dadurch kann der Futterroboter besonders zuverlässig während seiner Fahrt entlang des Bewegungsweges mit elektrischer Energie versorgt werden. Die Stromschiene kann oberhalb des Futterroboters im Stall fest angeordnet sein. Der Schleifkontakt kann über ein Gestänge mit dem Futterroboter verbunden sein.

Das System kann eine Lenkeinrichtung umfassen, die eine dem vorbestimmten Bewegungsweg folgende Lenkschiene und eine Abtastrichtung zur Steuerung des Fahrwegs aufweist, wobei optional die Lenkschiene in die Stromschiene integriert ist. Dadurch kann der Futterroboter mit der Lenkschiene entlang des vorbestimmten Bewegungsweges besonders einfach gesteuert werden. Die Lenkschiene kann eine Seitenfläche der Stromschiene sein. Die Abtasteinrichtung kann wenigstens einen Drehgeber umfassen, um die Position des Futterroboters gegenüber der Lenkschiene zu erfassen. Die Abtasteinrichtung kann mit der Steuerung des selbstfahrenden Fahrwerks verbunden sein. Die Abtasteinrichtung kann als Teil des Gestänges ausgebildet sein, das den Futterroboter mit der Lenkschiene und/oder der Stromschiene verbindet.

Das System kann eine Lenkeinrichtung mit einem im Stallboden angeordneten elektrischen Leiter, der z.B. über ein magnetisches Feld Radiosignale aussendet und einem am Futterroboter angeordneten Sensor (z.B. als RFID scanner) umfassen, wobei der Sensor dazu ausgebildet ist, den elektrischen Leiter zu verfolgen und wobei optional der Sensor als Spule ausgebildet ist. Der elektrische Leiter kann ein Draht oder eine Schiene sein. Der elektrische Leiter kann entlang des vorbestimmten Bewegungswegs des Futterroboters angeordnet sein.

Das System kann eine Lenkeinrichtung mit einem Transponder oder einem Signalgeber umfassen. Der Transponder kann im Boden oder in einem Fressgitter angebracht sein und/oder als RFID-Tag ausgebildet sein. Mehrere Transponder können entlang des vorbestimmten Bewegungswegs des Futterroboters angeordnet sein. Das Lenksystem kann einen Empfänger umfassen, der dazu ausgebildet ist, die Signale des Transponders zu erfassen. Das Lenksystem kann eine Regeleinrichtung umfassen, die dazu ausgebildet ist, die Transponder mittels des Sensors bei der Fahrt sequentiell zu erfassen, um den vorbestimmten Bewegungsweg zu ermitteln.

Das System kann jede bekannte Lenkeinrichtung umfassen.

Weitere Merkmale und Vorteile der Erfindung werden nachfolgend anhand der in den Figuren darstellten Ausführungsbeispiele erläutert. Dabei zeigt
- Fig. 1: eine Darstellung eines ersten Ausführungsbeispiels eines Futterroboters mit einem Raupenantrieb in einer perspektivischen Ansicht;
- Fig. 2A: eine Darstellung eines zweiten Ausführungsbeispiels eines Futterroboters mit einem Raupenantrieb in einer seitlichen Ansicht;
- Fig. 2B: eine Detailansicht der Fig. 2A;
- Fig. 3A: eine Darstellung eines selbstfahrenden Fahrwerks eines dritten Ausführungsbeispiels eines Futterroboters in einer perspektivischen Ansicht;
- Fig. 3B: das Fahrwerk aus der Fig. 3A in einer Draufsicht;
- Fig. 4A: eine Darstellung eines selbstfahrenden Fahrwerks eines vierten Ausführungsbeispiels eines Futterroboters in einer perspektivischen Ansicht;
- Fig. 4B: eine Draufsicht des selbstfahrenden Fahrwerks der Fig. 4A;
- Fig. 5A: eine Darstellung eines fünften Ausführungsbeispiels eines Futterroboters mit einem Raupenantrieb in einer seitlichen Darstellung;
- Fig. 5B: eine Detailansicht aus der Fig. 5A;
- Fig. 6A: eine Darstellung eines sechsten Ausführungsbeispiels eines Futterroboters mit Raupenantrieb in einer seitlichen Ansicht;
- Fig. 6B: eine Detailansicht aus der Fig. 6A;
- Fig. 7A: eine Darstellung eines siebten Ausführungsbeispiels eines Futterroboters mit Raupenantrieb in einer perspektivischen Darstellung;
- Fig. 7B: eine Darstellung des Fahrwerks aus der Fig. 7A in einer perspektivischen Ansicht; und
- Fig. 8: eine Darstellung eines achten Ausführungsbeispiels eines Futterroboters mit Raupenantrieb in einer perspektivischen Ansicht.

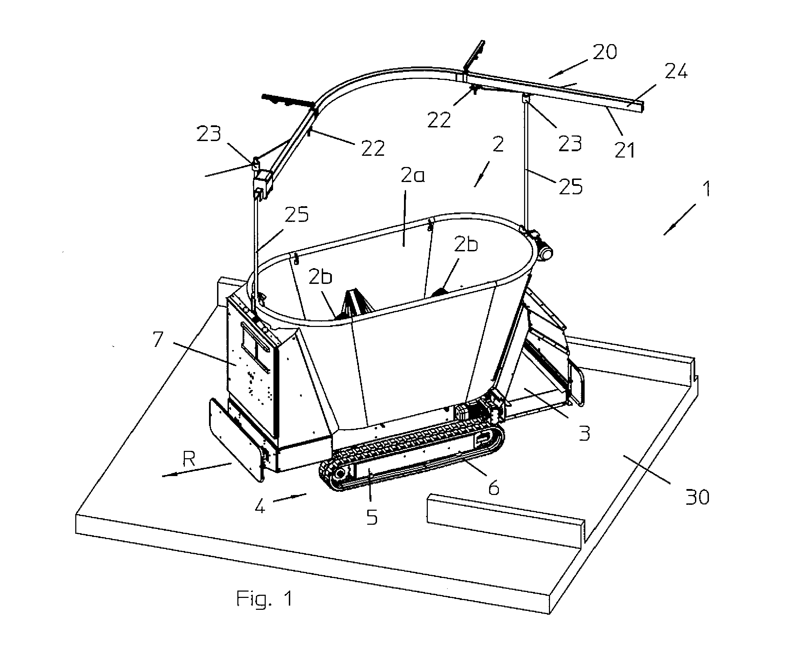

In der Fig. 1 ist eine Darstellung eines ersten Ausführungsbeispiels eines Futterroboters 1 mit einem Raupenantrieb 5 in einer perspektivischen Ansicht dargestellt. Zu sehen ist, dass der Futterroboter 1 gerade in einer Stallgasse 30 um eine Kurve fährt, wobei er das Viehfutter aus dem Futterbehälter 2 über die Verteileinrichtung 3 verteilt. Die Verteileinrichtung 3 verfügt über seitliche Öffnungen, aus denen das Viehfutter entlang der Längsseiten der Stallgasse 30 ausgeworfen wird.

Ebenfalls zu sehen ist, dass der Futterbehälter 2 eine im Wesentlichen ovale, wannenförmige Form aufweist, die nach oben geöffnet ist. Die Wände 2a des Futterbehälters 2 sind in einem Winkel nach oben geöffnet, damit sich das Futter am Boden (hier nicht dargestellt) möglichst nah an den Mischschnecken 2b anhäuft. In der Ansicht sind lediglich die oberen Enden der beiden Mischschnecken 2b zu sehen, die annähernd über die gesamte Höhe des Futterbehälters 2 vertikal angeordnet sind und mittels eines hier nicht dargestellten Antriebs gedreht werden. Dadurch wird das Viehfutter zerkleinert und durchmischt. Am Boden des Futterbehälters 2 befindet sich weiterhin eine Öffnung, durch die das gemischte Viehfutter an die Verteileinrichtung 3 übergeben wird.

Darüber hinaus ist zu sehen, dass der Futterroboter 1 ein selbstfahrendes Fahrwerk 4 aufweist. Dieses umfasst den Raupenantrieb 5, mit den beiden Antriebsketten 6. In der Darstellung ist lediglich die in Fahrtrichtung R links angeordnete Antriebskette 6 zu sehen. Die zweite, hier nicht dargestelle Antriebskette befindet sich auf der gegenüberliegenden Seite parallel zur ersten Antriebskette 6. Das selbstfahrende Fahrwerk 4 weist zum Antrieb zwei Elektromotore auf (hier nicht dargestellt) die mittels einer im Gehäuse 7 angeordneten Steuerung angesteuert werden.

Der Futterroboter 1 wird über das Stromversorgungs- und Lenksystem 20 mit Strom versorgt. Hierzu ist die Stromschiene 21 im Stall oberhalb des Futterroboters 1 installiert und folgt im Wesentlichen entlang des für den Futterroboter 1 vorbestimmten Bewegungsweges. Über den Schleifkontakt 22 wird der Strom von der Stromschiene 21 abgegriffen und dem Futterroboter 1 zugeführt. Darüber hinaus ist zu sehen, dass die Lenkschiene 24 in der Stromschiene 21 integriert ist. Über die beiden Abtasteinrichtungen 23 am Gestänge 25 wird die Position des Futterroboters 1 gegenüber der Lenkschiene 24 erfasst und mittels der Steuerung 7 so ausgewertet, dass damit der gewünschte Bewegungsweg des Futterroboters 1 bestimmt wird.

Dadurch, dass das Fahrwerk 4 des Futterroboters 1 mit dem Raupenantrieb 5 ausgebildet ist, kann der Futterroboter 1 auch über Futterhaufen ohne Durchrutschen hinweg fahren. Dadurch ist gewährleitstet, dass der tatsächliche Bewegungsweg des Futterroboters 1 gemäß dem von der Lenkschiene 24 vorgegebenen Weg verläuft. Dadurch ist das selbstfahrende Fahrwerk 4 besonders zuverlässig. Andernfalls könnte der Futterroboter 1 in die seitliche Begrenzung der Stallgasse 30 fahren oder das Gestänge 25 könnte verbogen werden. Ebenso ist denkbar, dass das Gestänge 25 zusätzlich einen Sicherheitsschalter umfasst, der den Futterroboter 1 bei einer zu großen Abweichung vom vorgegebenen Weg automatisch abschaltet.

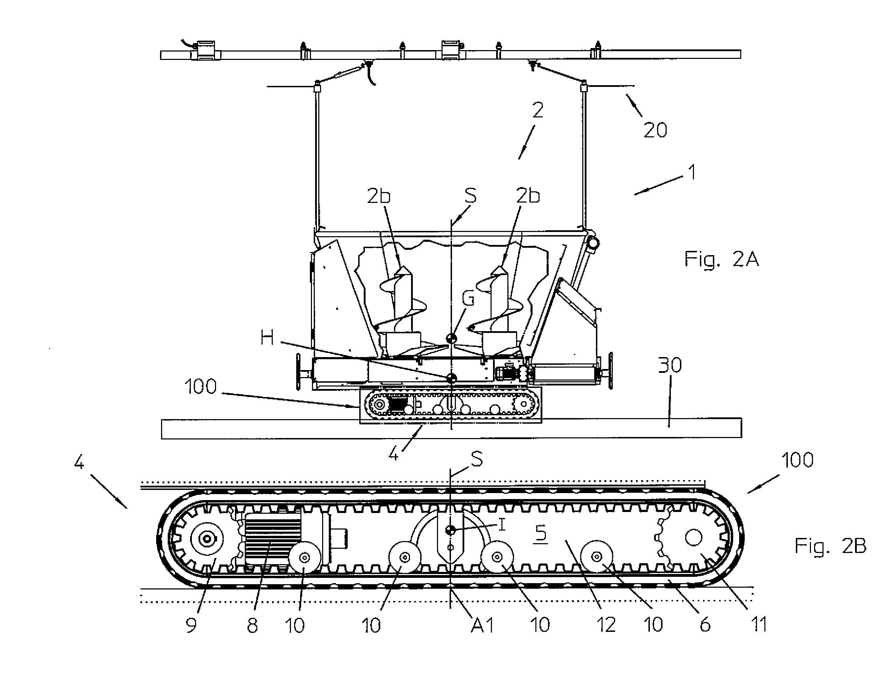

In der Fig. 2A ist eine zweite Ausführung eines Futterroboters 1 mit einem Raupenantrieb 5 in einer seitlichen Ansicht dargestellt. Fig. 2B zeigt darüber hinaus die Detailansicht 100 der Fig. 2A. Die zweite Ausführungsform unterscheidet sich von der ersten Ausführungsform in Fig. 1 dadurch, dass der Futterbehälter 2 zu einer durch den Massenmittelpunkt G des unbeladenen Futterroboters 1 vertikal verlaufenden Symmetrieachse S symmetrisch ausgebildet ist. Dadurch verlagert sich der Massenmittelpunkt G des Futterroboters 1 beim Befüllen des Futterbehälters 2 möglichst wenig.

Darüber hinaus ist zu sehen, dass die beiden Mischschnecken 2b symmetrisch zur Symmetrieachse S angeordnet sind. Dadurch wird der Massenmittelpunkt des beladenen Futterroboters 1 bei einem Mischvorgang möglichst wenig verändert.

Darüber hinaus ist zu sehen, dass sowohl der Massenmittelpunkt H des selbstfahrenden Fahrwerks 4 als auch der gemeinsame Massenmittelpunkt I der beiden Antriebsketten 6 mit der Symmetrieachse S zusammenfallen. Dadurch ist der gesamte Futterroboter 1 bezüglich seiner Masse im Wesentlichen symmetrisch zur Symmetrieachse S ausgebildet. Insgesamt wird dadurch bei einer Beladung und bei einer Kurvenfahrt der Schwerpunkt G des beladenen Futterroboters 1 nur unwesentlich verändert und in der Folge verlagert sich die Aufstandsfläche A1 nicht mit der Beladung. Dadurch kann die Drehbewegung des Futterroboters 1 besonders genau vorausberechnet bzw. erfasst werden.

Darüber hinaus ist in der Fig. 2B zu sehen, dass das selbstfahrende Fahrwerk einen Stützrahmen 5 aufweist, an dem die Umlenkrollen 9 und 11, sowie die Führungsrollen 10 angeordnet sind. Die Antriebsketten 6 werden über die Umlenkrollen 9, 11 gespannt und angetrieben bzw. über die Führungsrollen 10 geführt. Die Umlenkrolle 9 ist dabei über ein hier nicht dargestelltes Getriebe mit dem Antrieb 8 verbunden und treibt darüber die Antriebskette 6 an.

Durch diesen Aufbau des selbstfahrenden Fahrwerks 4 ist eine besonders gleichmäßige und stabile Fahrt des Futterroboters 1 über glatte Bodenstellen oder Futterhaufen gewährleistet.

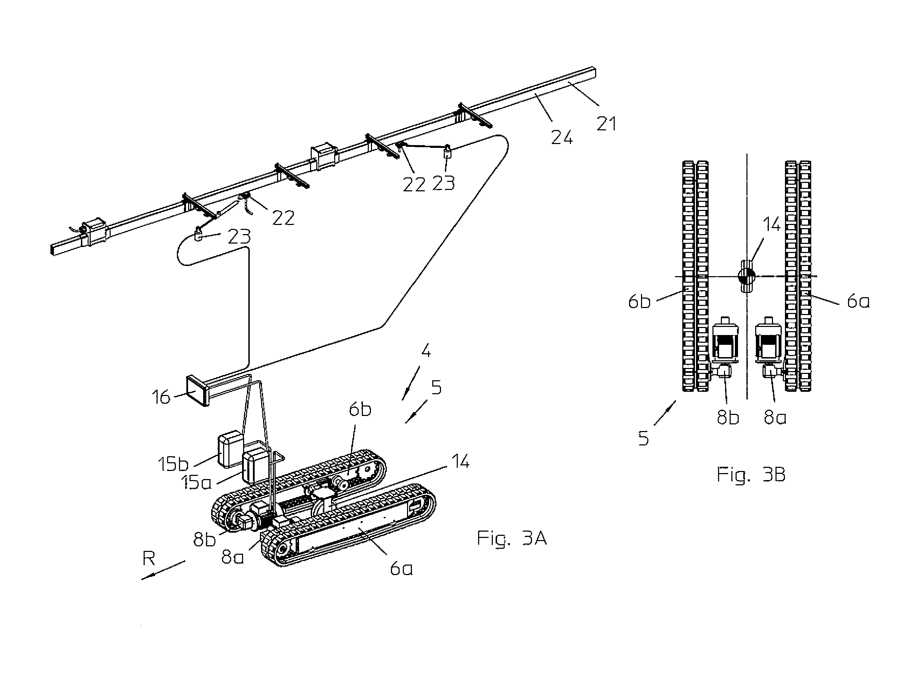

In den Fig. 3A und 3B ist eine dritte Ausführungsform eines selbstfahrenden Fahrwerks 4 für einen Futterroboter in einer perspektivischen Ansicht bzw. in einer Draufsicht dargestellt. Das Fahrwerk 4 kommt hier bei einem Futterroboter 1, wie in der Fig. 1 dargestellt, zum Einsatz.

Zu sehen ist in der Fig. 3A, dass, wie bereits in Bezug auf Fig. 1 genauer beschrieben, die Strom- und Lenkschiene 21, 24 entlang des vorbestimmten Bewegungsweges ausgebildet ist und davon mittels der Schleifkontakte 22 Strom abgegriffen wird. Darüber hinaus wird über die Abtasteinrichtungen 23 der Verlauf der Lenkschiene 24 abgetastet und als Signale codiert an die Steuerung 16 abgegeben. Die Steuerung 16 steuert die beiden Leistungsregler 15a und 15b, die jeweils zur Stromversorgung der beiden Antriebe 8a und 8b ausgebildet sind.

Die beiden Antriebe 8a und 8b sind hier als Elektromotore ausgebildet und treiben entsprechend die beiden Antriebsketten 6a und 6b an. Dabei kann über unterschiedlich gewählte Drehzahlen der beiden Antriebe 8a und 8b die Kurvenfahrt des Futterroboters gesteuert werden. Dreht sich beispielsweise der Antrieb 8b schneller als der Antrieb 8a, so bewirkt dies einen schnelleren Vorlauf der Antriebskette 6b gegenüber der Antriebskette 6a. Bei einer Fahrt in Richtung der Fahrtrichtung R würde bei diesem Beispiel der Futterroboter eine Linkskurve durchfahren.

Darüber hinaus ist am selbstfahrenden Fahrwerk 4 die Messeinrichtung 14 zu sehen, die hier als Messrad ausgebildet ist, das in direktem Kontakt mit dem Boden steht. Die Messeinrichtung 14 ist weiterhin über einen Flansch fest mit dem selbstfahrenden Fahrwerk 4 verbunden. Über einen hier nicht dargestellten Drehgeber wird die Drehzahl des Messrades bestimmt und als Signal von der Messeinrichtung 14 an die Steuerung 16 weitergeleitet. Mittels des bekannten Radius des Messrades kann dann der zurückgelegte Weg des selbstfahrenden Fahrwerks 4 in Fahrtrichtung R berechnet werden. Alternativ kann dieser auch direkt in der Messeinrichtung 14 berechnet werden.

Dadurch, dass mit der Messeinrichtung 14 der Weg in Fahrtrichtung R berechnet werden kann, kann auch bei einer Kurvenfahrt auf den tatsächlichen Drehpunkt des selbstfahrenden Fahrwerks 4 unabhängig vom Schlupf geschlossen werden. Beispielsweise würde sich bei einem gleichmäßigen Schlupf und einem entgegengesetzten Antrieb der beiden Antriebsketten 6a bzw. 6b der Futterroboter genau zentral am Ort der Messeinrichtung 14 drehen (vgl. Fig. 3b). Folglich würde sich also das Messrad der Messeinrichtung 14 nicht mitdrehen. Dem gegenüber würde sich der Drehpunkt weiter zur Antriebskette 6a hin verlagern, falls diese mehr Schlupf hätte als die Antriebskette 6b. Das Messrad würde nun gegenüber dem Boden einen Weg zurücklegen und sich dabei drehen, wodurch der tatsächliche Drehpunkt des selbstfahrenden Fahrwerks 4 angenähert werden könnte.

Folglich kann die Fahrt des Fahrwerks 4 noch zuverlässiger bestimmt und damit durch die Steuerung 16 gegebenenfalls korrigiert werden.

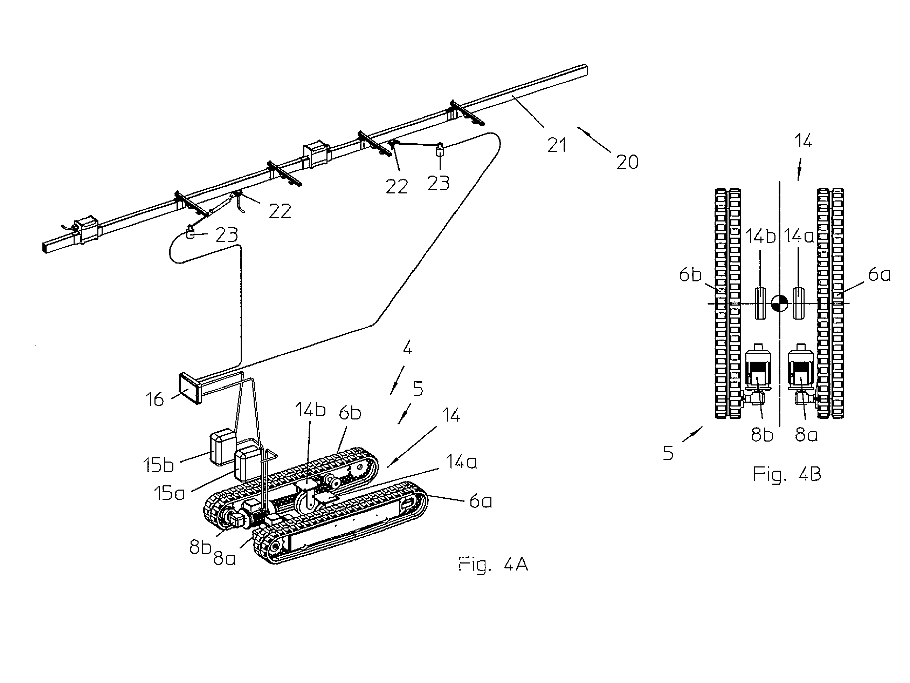

In den Fig. 4A und 4B ist eine vierte Ausführungsform eines selbstfahrenden Fahrwerks 4 für einen Futterroboter in einer perspektivischen Ansicht bzw. einer Draufsicht dargestellt. Das Fahrwerk 4 kommt hier ebenfalls bei einem Futterroboter 1, wie in der Fig. 1 dargestellt, zum Einsatz.

Das in den Fig. 4A und 4B dargestellte selbstfahrende Fahrwerk 4 unterscheidet sich von dem in den Fig. 3A und 3B lediglich dadurch, dass die Messeinrichtung 14 zwei Messräder 14a und 14b aufweist.

Die Messeinrichtung 14 umfasst zur Erfassung der Drehzahlen der beiden Messräder 14a und 14b jeweils einen Drehgeber. Mit den bekannten Radien der beiden Messräder 14a und 14b kann dann die genaue Bewegungsbahn des Fahrwerks 4 berechnet werden.

Durch die Ermittlung der genauen Bewegungsbahn des Fahrwerks 4 ist es somit möglich, unabhängig vom Schlupf der beiden Antriebsketten 6a, 6b die Bewegung des Futterroboters zu berechnen.

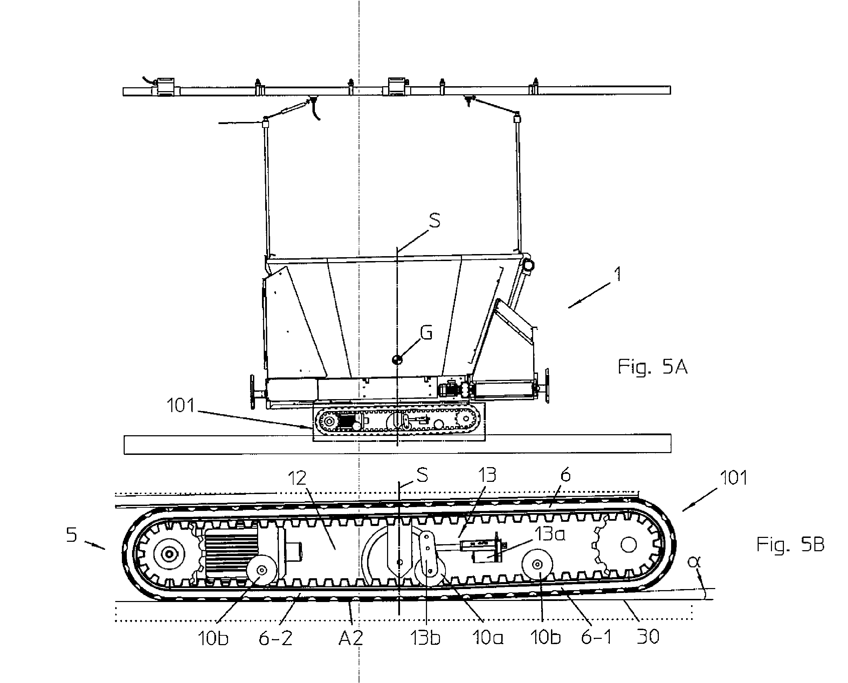

In den Fig. 5A und 5B ist eine fünfte Ausführungsform eines Futterroboters in einer Seitenansicht gezeigt. Die Fig. 5B zeigt das Detail 101 der Fig. 5A. Die fünfte Ausführungsform unterscheidet sich von der in der Fig. 1 gezeigten ersten Ausführungsform dadurch, dass der Raupenantrieb 5 mit einer Kettenführungsrolle 10a ausgebildet ist, die mittels des Antriebs 13 höhenverstellbar ist.

Der Antrieb 13 umfasst hier einen hydraulischen Zylinder 13a, der in Fig. 5B horizontal verläuft und über ein Gelenk mit dem vertikalen Hebel 13b verbunden ist. Der Hebel 13b ist am oberen Ende über ein Gelenk mit dem Stützrahmen 12 schwenkbar verbunden. Am unteren Ende des Hebels 13b ist die Kettenführungsrolle 10a über ein Lager angebunden. Durch den Hydraulikzylinder 13a wird der Hebel 13b um das obere Gelenk geschwenkt und so die Höhe der Kettenführungsrolle 10a verändert.

Durch eine Höhenverstellung der Kettenführungsrolle 10a nach unten verläuft der untere Teil der Antriebskette 6 gegenüber der Stallgasse 30 nicht mehr gerade sondern ist in zwei gegeneinander abgewinkelte Segmente 6-1 und 6-2 unterteilt.

Dadurch, dass der Massenmittelpunkt G des Futterroboters 1 vertikal über der Symmetrieachse S verläuft, steht nun der Futterroboter 1 im Wesentlichen mit dem Segment 6-2 auf der Stallgasse 30 auf. Das erste Segment 6-1 weist dagegen den Winkel α gegenüber der Stallgasse 30 auf und steht damit in der Luft.

Durch die so nach unten höhenverstellte Kettenführungsrolle 10a wird die Aufstandsfläche A2 des Raupenantriebs deutlich verkleinert und bei einer Kurvenfahrt des Futterroboters 1 ergibt sich ein genaue Lage der Drehachse. Dadurch kann der tatsächlich zurückgelegte Bewegungsweg des Futterroboters 1 genau bestimmt werden. Bei einer Geradeausfahrt wird dagegen die Kettenführungsrolle 10a nach oben höhenverstellt, so dass sie in etwa den gleichen Anpressdruck an die Antriebskette 6 liefert, wie die beiden nicht-höhenverstellbaren Kettenführungsrollen 10b. Dadurch liegt der Futterroboter 1 auf der gesamten Fläche des Raupenantriebs 5 auf dem Boden 30 auf und es ergibt sich eine stabile Geradeausfahrt.

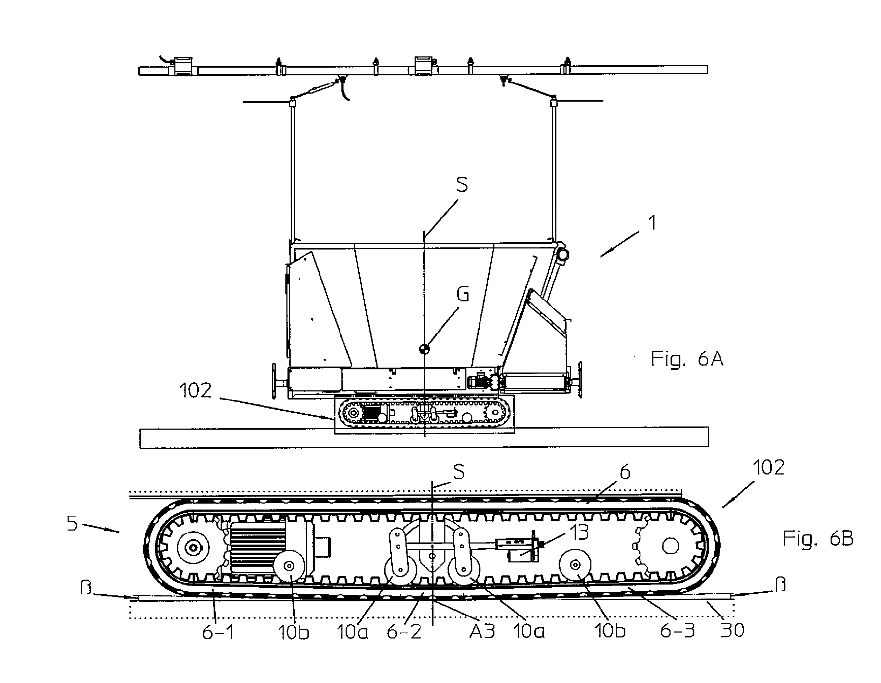

In den Fig. 6A und 6B ist ein sechstes Ausführungsbeispiel eines Futterroboters in einer Seitenansicht gezeigt. Die Fig. 6B zeigt dabei eine Detailansicht 102 der Fig. 6A. Das sechste Ausführungsbeispiel unterscheidet sich von dem in den Fig. 5A und 5B gezeigten fünften Ausführungsbeispiel lediglich dadurch, dass der Raupenantrieb 5 für jede Antriebskette 6 zwei der höhenverstellbaren Kettenführungsrollen 10a aufweist. Zu sehen ist, dass die beiden Kettenführungsrollen 10a symmetrisch zur Symmetrieachse bzw. zum Massenmittelpunkt G angeordnet sind. Diese werden über den Antrieb 13 gemeinsam höhenverstellt. Denkbar ist jedoch auch, dass jede Kettenführungsrolle 10a ihren eigenen Antrieb aufweist und unabhängig gesteuert wird.

In der Fig. 6B sind die beiden Kettenführungsrollen 10a nach unten verfahren. Dadurch steht die Antriebskette 6 im Bereich ihres zweiten Segments 6-2 mit der Aufstandsfläche A3 auf der Stallgasse 30 auf. Dagegen nehmen die beiden anderen Segmente 6-1 und 6-2 den Winkel β gegenüber dem Boden ein und stehen somit in der Luft.

Dadurch ergibt sich eine besonders kleine Aufstandsfläche A3 des Raupenantriebs 5. Bei einer Kurvenfahrt ergibt sich dadurch eine besonders genaue Lage des Drehpunkts des Raupenantriebs 5 und es kann daraus genau ermittelt werden, auf welcher Bewegungsbahn sich der Futterroboter 1 bewegt. Dagegen werden die beiden höhenverstellbaren Kettenführungsrollen 10a bei einer Geradeausfahrt soweit nach oben verfahren, dass sie in etwa den gleichen Anpressdruck wie die beiden Führungsrollen 10b aufweisen. Dadurch liegt die Antriebskette 6 vollflächig auf der Stallgasse 30 auf und es kann eine besonders zuverlässige Geradeausfahrt erzielt werden.

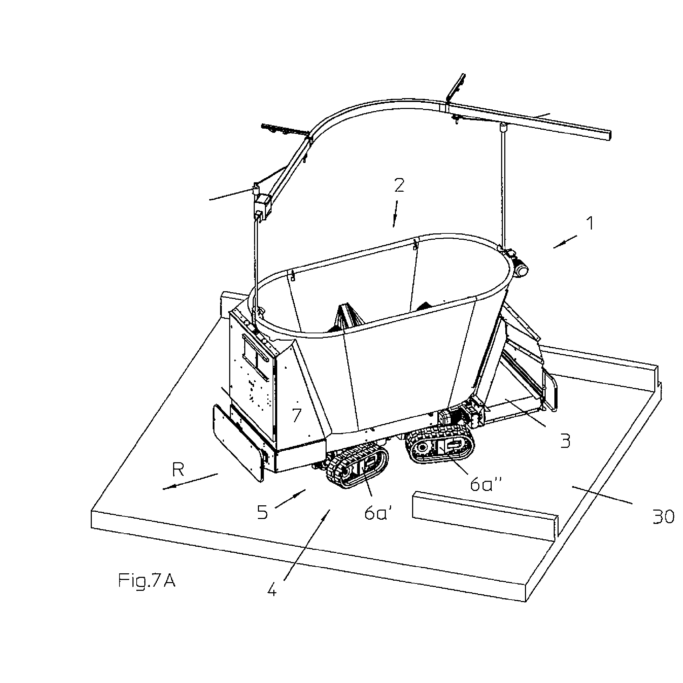

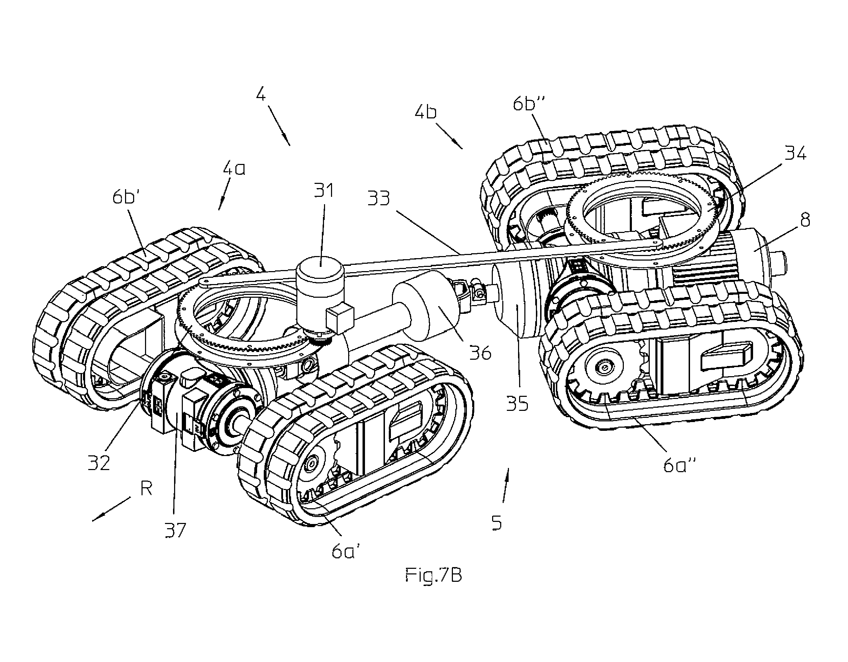

In den Fig. 7A und 7B ist ein siebtes Ausführungsbeispiel eines Futterroboters 1 in einer perspektivischen Ansicht gezeigt. Die Fig. 7B zeigt dabei eine Detailansicht des Raupenantriebs 5 aus der Fig. 7A. Das siebte Ausführungsbeispiel unterscheidet sich von dem in der Fig. 1 gezeigten ersten Ausführungsbeispiel lediglich dadurch, dass der Raupenantrieb 5 vier Antriebsketten 6a', 6a", 6b' und 6b" umfasst, die zum Lenken des Futterroboters 1 paarweise gegeneinander schwenkbar sind. Zu sehen ist, dass die Antriebsketten 6a', 6a", 6b' und 6b" jeweils im wesentlichen an den Ecken des selbstfahrenden Fahrwerks 4 angeordnet sind. Wie genauer der Fig. 7B zu entnehmen ist, sind die beiden Antriebsketten 6a' und 6b' mittels des Mechanismus 31-34 gegenüber den beiden Antriebsketten 6a" und 6b" paarweise schwenkbar. Eine Steuerung für das selbstfahrende Fahrwerk 4 ist im Gehäuse 7 angeordnet und steuert den Antrieb 8 und den Lenkmotor 31 an.

Der vordere Teil 4a des Fahrwerks 4 ist über den drehbaren Ring 32 gegenüber dem Futterroboter 1 schwenkbar, wobei der Ring 32 mit dem Elektromotor 31 gedreht wird. An der Unterseite ist der Ring 32 mit dem vorderen Getriebe 37 und den beiden vorderen Antriebsketten 6a' und 6b' verbunden. Bei einer Aktivierung des Elektromotors 31 schwenkt also der vordere Teil 4a des Fahrwerks 4 gegenüber der Fahrtrichtung R. Des Weiteren wird über die Stange 33 die Drehung des vorderen Rings 32 an den hinteren Ring 34 übertragen. Folglich dreht sich der hintere Ring 34 entgegengesetzt zum vorderen Ring 32. Da der hintere Ring 34 über das hintere Getriebe 35 mit den hinteren Antriebsketten 6a" und 6b" verbunden ist, schwenken diese nun genau entgegengesetzt zu den vorderen Antriebsketten 6a' und 6b'. Dadurch ergibt sich ein besonders kleiner Wendekreis des Fahrwerks 4. Alternativ ist auch denkbar, dass lediglich eines der beiden Antriebskettenpaare 6a', 6b' oder 6a", 6b" schwenkbar ist.

Des Weiteren umfasst das Fahrwerk 4 den Antrieb 8. Dieser wird entsprechend der Leistungsanforderung an das Fahrwerk 4 durch das Getriebe 35 so übersetzt, dass die hinteren Antriebsketten 6a" und 6b" die gewünschte Vorwärtsbewegung des Futterroboters 1 bewirken. Darüber hinaus umfasst das hintere Getriebe 35 noch ein Differenzial zum Ausgleich unterschiedlicher Drehzahlen zwischen den beiden hinteren Antriebsketten 6a" und 6b".

Des Weiteren wird die Antriebskraft des Antriebs 8 über die Kardanwelle 36 an das vordere Getriebe 37 übertragen, welches über ein Differenzial die beiden vorderen Antriebsketten 6a' und 6b' antreibt. Folglich werden alle vier Antriebsketten 6a', 6b', 6a" und 6b" mit dem Antrieb 8 angetrieben.

Denkbar ist auch, dass die beiden vorderen Antriebsketten 6a' und 6b' nicht über die Kardanwelle 36 mit dem Antriebe 8 sondern über ein Differentialgetriebe mit einem separaten, vorderen Antrieb verbunden sind. Der vordere Antrieb kann dabei schneller laufen als der hintere Antrieb 8 (beispielsweise um 2%).

Weiterhin ist denkbar, dass jede Antriebskette 6a', 6b', 6a" und 6b" mit einem eigenen Antrieb angetrieben wird, wobei die Antriebe unabhängig voneinander elektronisch geregelt werden und dadurch die Antriebsketten 6a', 6b', 6a" und 6b" mit gleicher oder unterschiedlicher Geschwindigkeit laufen.

Durch das in den Fig. 7A und 7B gezeigte Fahrwerk 4 ist es mittels der vier Antriebsketten 6a', 6b', 6a" und 6b" möglich, durch die paarweise Schwenkung eine Kurvenfahrt zu ermöglichen. Durch die Drehstellung des vorderen Teils 4a gegenüber dem hinteren Teil 4b des Fahrwerks 4 ist eine genaue Ermittlung der Bewegungsbahn möglich. Demnach kann das selbstfahrende Fahrwerk 4 also auch bei einem Schlupf der Antriebsketten 6a', 6b', 6a", 6b" seine Bewegungsbahn ermitteln und sich besonders zuverlässig durch die Stallgassen bewegen.

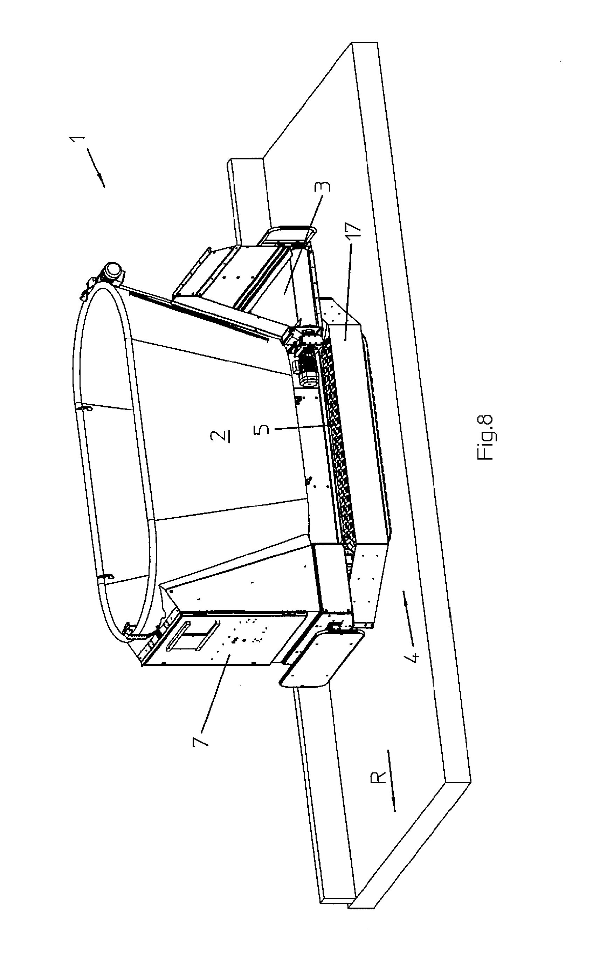

In der Fig. 8 ist ein achtes Ausführungsbeispiel eines Futterroboters 1 in einer perspektivischen Ansicht gezeigt. Das achte Ausführungsbeispiel unterscheidet sich von den zuvor beschriebenen Ausführungsbeispielen 1-7 lediglich dadurch, dass der Futterroboter 1 einen Futterschieber 17 umfasst, der den Raupenantrieb 5 horizontal an allen Seiten umschließt. Der Futterschieber 17 ist hier mit allen zuvor beschriebenen Ausführungsbeispielen kombinierbar.

Zu sehen ist, dass der Futterschieber 17 plattenartig entlang der äußeren Seite des Raupenantriebs 5 ausgebildet ist. Entsprechende Platten sind auch an der hier nicht dargestellten rechten Seite vorhanden. Darüber hinaus sind in Vorwärts- und Rückwärtsrichtung pflugartige Plattenelemente angeordnet. Dementsprechend wird also bei einer Fahrt des Futterroboters 1 entlang der Fahrtrichtung R das Futter seitlich so verschoben, dass es neben dem Fahrwerk 4 zu liegen kommt.

Dadurch wird einerseits verhindert, dass der Raupenantrieb durch darin eingezogenes Futter verstopft und andererseits, dass der Raupenantrieb 5 keinen unerwarteten Schlupf auf Futterhaufen erfährt. Dadurch ergibt sich eine besonders zuverlässige Vorwärtsbewegung des Futterroboters 1.

Es versteht sich, dass in den zuvor beschriebenen Ausführungsbeispielen genannte Merkmale nicht auf diese speziellen Kombinationen beschränkt sind und in beliebigen anderen Kombinationen möglich sind.

## Patentansprüche

1. Unbemannter Futterroboter (1) zur automatisierten Verteilung von Viehfutter mit einer Verteileinrichtung (3), die an einem selbstfahrenden Fahrwerk (4) angeordnet ist,
**dadurch gekennzeichnet, dass**
das Fahrwerk (4) einen Raupenantrieb (5) mit wenigstens zwei Antriebsketten (6) umfasst.

2. Unbemannter Futterroboter (1) nach Anspruch 1, wobei der Futterroboter einen Futterbehälter (2) umfasst, der optional zu einer durch einen Massenmittelpunkt (G) des unbeladenen Futterroboters (1) vertikal verlaufenden Symmetrieachse (S) symmetrisch ausgebildet ist.

3. Unbemannter Futterroboter (1) nach Anspruch 2, wobei der Futterbehälter (2) ein, zwei, drei oder mehrere Mischschnecken (2b) umfasst, die zu der Symmetrieachse (S) symmetrisch angeordnet sind.

4. Unbemannter Futterroboter (1) nach Anspruch 2 oder 3, wobei ein Massenmittelpunkt (H) des Fahrwerks (4) mit der Symmetrieachse (S) zusammenfällt.

5. Unbemannter Futterroboter (1) nach wenigstens einem der Ansprüche 2 - 4, wobei ein gemeinsamer Massenmittelpunkt (I) der beiden Antriebsketten (6) mit der Symmetrieachse (S) zusammenfällt.

6. Unbemannter Futterroboter (1) nach wenigstens einem der Ansprüche 1 - 5, wobei der Futterroboter (1) wenigstens eine Messeinrichtung (14) zur Bestimmung der tatsächlichen Bewegungsbahn umfasst, die optional mit einem Messrad ausgebildet ist.

7. Unbemannter Futterroboter (1) nach wenigstens einem der Ansprüche 1 - 6, wobei der Raupenantrieb (5) zur Verstellung einer Aufstandsfläche (A2, A3) der Antriebsketten (6) mit wenigstens einer Kettenführungsrolle (10a) ausgebildet ist, die mittels eines Antriebs (13) höhenverstellbar ist.

8. Unbemannter Futterroboter (1) nach Anspruch 7, wobei der Raupenantrieb (5) genau zwei Antriebsketten (6a, 6b) umfasst, wobei an wenigstens einer der zwei Antriebsketten die höhenverstellbare Kettenführungsrolle (10a) angeordnet ist.

9. Unbemannter Futterroboter (1) nach Anspruch 7, wobei der Raupenantrieb (5) genau zwei Antriebsketten (6a, 6b) umfasst, wobei an wenigstens einer der zwei Antriebsketten zwei der höhenverstellbaren Kettenführungsrollen (10a) angeordnet sind.

10. Unbemannter Futterroboter (1) nach wenigstens einem der Ansprüche 1 - 7, wobei der Raupenantrieb (5) genau vier Antriebsketten (6a', 6a", 6b', 6b") umfasst, die zum Lenken des Futterroboters paarweise gegeneinander schwenkbar sind.

11. Unbemannter Futterroboter (1) nach wenigstens einem der Ansprüche 1 - 10, wobei die Verteileinrichtung (3) einen Futterschieber (17) umfasst, der optional den Raupenantrieb (5) horizontal an allen Seiten umschließt.

12. Unbemannter Futterroboter (1) nach wenigstens einem der Ansprüche 1 - 11, wobei der Futterroboter (1) einen elektrischen Energiespeicher zur autonomen Stromversorgung des Raupenantriebs (5) umfasst, der die Energie im Wesentlichen mittels Kondensatoren speichert.

13. System, umfassend einen unbemannten Futterroboter (1) nach wenigstens einem der Ansprüche 1 - 12 und eine einem vorbestimmten Bewegungsweg des Futterroboters (1) folgende Stromschiene (21), wobei der Futterroboter (1) zur Stromversorgung über einen Schleifkontakt (22) mit der Stromschiene (21) verbunden ist.

14. System nach Anspruch 13 mit einer Lenkeinrichtung, die eine den vorbestimmten Bewegungsweg folgende Lenkschiene (24) und eine Abtasteinrichtung (23) zur Steuerung des Fahrwerks (4) aufweist, wobei optional die Lenkschiene (24) in die Stromschiene (21) integriert ist.

15. System nach Anspruch 13 mit einer Lenkeinrichtung, die einen im Stallboden angeordneten elektrischen Leiter und einen am Futterroboter (1) angeordneten Sensor umfasst, wobei der Sensor dazu ausgebildet ist, den elektrischen Leiter zu verfolgen und wobei optional der Sensor als Spule ausgebildet ist.

16. System nach Anspruch 13 mit einer Lenkeinrichtung, die einen Transponder oder einen Signalgeber umfasst.

17. System nach wenigstens einem der vorangegangenen Ansprüche, wobei der Raupenantrieb auf jeder Seite wenigstens 2 unabhängig voneinander antreib- und steuerbare Kettenführungsrollen (10a, 10b) aufweist.
